# EUROPEAN PATENT APPLICATION

(11) **EP 4 306 706 A1**
(43) Date of publication of application: **17.01.2024**
(21) Application number: 22926333.0
(22) Date of filing: 15.12.2022
(51) Int. Cl.: D06F 39/10, B01D 29/64, B01D 29/88, B01D 39/16, B01D 39/20, B01D 35/02, B01D 35/30, B01D 35/147, B01D 35/16

(54) **ROTARY FILTERING ASSEMBLY AND WASHING MACHINE COMPRISING SAME**

(30) Priority: 30.05.2022 KR 20220065785
(71) Applicant: Microfilter Co., Ltd., Chungcheongbuk-do 27856 (KR)
(72) Inventor: JOUNG, Whi Dong, Seoul 06544 (KR); KIM, Dong Hyun, Gongju-si, Chungcheongnam-do 32541 (KR); LEE, Kyong Su, Hwaseong-si, Gyeonggi-do 18396 (KR); PARK, Jin Geun, Gyeonggi-do 12553 (KR); LEE, Hyung Gue, Cheongju-si, Chungcheongbuk-do 28791 (KR)
(74) Representative: BCKIP Part mbB
(86) International application number: PCT/KR2022/020424
(87) International publication number: WO 2023/234507

(57) **Abstract**

The present disclosure provides a rotational filtering assembly and a washing machine including the same, the rotational filtering assembly including a filter housing body having an inlet and an outlet formed therein such that washing water is introduced thereinto from the outside, and then filtered and discharged therefrom, a filter part disposed inside the filter housing body, and a rotational impeller unit rotatably coupled to a central shaft of the filter housing body and having at least one flange portion formed therein.

## Description

### [Technical Field]

The present disclosure relates to a rotational filtering assembly and a washing machine including the same, and more particularly, to a rotational filtering assembly capable of filtering washing water when applied to a home appliance for clothes, and a washing machine including the same.

### [Background Art]

In general, a laundry treating apparatus collectively refers to a washing machine which removes dirt from clothes, bedding, or the like (hereinafter referred to as 'cloth') using water, detergent, and mechanical action, a dryer which dries wet cloth using dry hot air heated by a heater and mechanical action, a washing machine-cum-dryer with both washing and drying functions, a refresher which sprays heated steam onto laundry to prevent allergy caused by the cloth, and various other apparatuses which process cloth by applying physical and chemical actions to the cloth.

Additionally, the washing machine may be classified as a top-load type washing machine in which a cloth entrance hole through which cloth comes in and out is formed on the upper surface of the cabinet and washing is performed by the rotational water flow generated when the washing tub rotates, and a drum washing machine in which a cloth entrance hole is formed on the front surface of the cabinet and washing is performed by the fall of the cloth when the drum rotates.

A conventional top-load type washing machine includes a cabinet with an open top which forms the external appearance, a base installed at the bottom of the cabinet, an outer tub installed inside the cabinet to store water, a washing tub disposed inside the outer tub to perform washing of cloth, a driving device disposed at the bottom of the washing tub and including a motor for rotating the washing tub, a water supply device for supplying water into the outer tub, and a drainage device for draining the water in the outer tub.

Meanwhile, synthetic fibers are increasingly spread and used widely in recent years. As a result, the amount of fine synthetic microfibers is proliferated in wastewater and surrounding environments, further increasing environmental pollution. In particular, synthetic microfibers are produced/discharged during the washing process of nonbiodegradable synthetic fibers, resulting in greater water pollution by fine plastics.

Thus, there is a concern that various fine dust (fine plastic laundry dust, fiber dust, yellow dust, heavy metals, radioactive substances, fine dust, other harmful bacteria, or the like) discharged from laundry such as clothes or the like is discharged to the outside while remaining in the washing water, thereby contaminating the environment.

### [Document of Related Art]

### [Patent Document]

Patent document 0001: Korean Patent No. 10-2179793

### [Summary of Invention]

### [Technical Problem]

The present disclosure has been conceived to address the above-described technical drawbacks, and its object is to provide a rotational filtering assembly and a washing machine including the same, the assembly being capable of making it possible to use the filtering device more effectively for a long time by providing a structure that can easily remove residues such as fine fiber plastics which may be accumulated in the filtering device mounted on the drainage region of a home appliances for clothes.

The technical drawbacks which this disclosure addresses are not limited to the aforementioned ones, but unmentioned other technical drawbacks which can be solved by this disclosure will become apparent to those skilled in the art from the description below.

### [Solution to Problem]

In order to achieve the above-mentioned objects, a rotational filtering assembly according to the present disclosure may include
a filter housing body having an inlet and an outlet formed therein such that washing water is introduced thereinto from the outside, and then filtered and discharged therefrom;
a filter part disposed inside the filter housing body; and
at least one rotational impeller unit rotatably coupled to a central shaft of the filter housing body and having at least one flange portion formed therein.

In an embodiment of the present disclosure, the filter housing may be formed in a hollow cylindrical shape or polygonal shape, and the rotational impeller may be formed at a region adjacent to at least one of the and outlet of the filter housing.

In an embodiment of the present disclosure, the flange portion of the rotational impeller may be formed in a shape extending radially outward with respect to the rotational central shaft.

In an embodiment of the present disclosure, at an end of the flange portion, at least one brush capable of shape deformation with a predetermined elastic force may be formed.

In an embodiment of the present disclosure, a gap may be formed between one side end of the flange portion of the rotational impeller and the outer surface of the filter part, so that they are spaced apart from each other by a predetermined distance, and
they include a structure in which the brush removes foreign substances stacked on the outer portion of the filter part when the rotational impeller is rotated.

In an embodiment of the present disclosure, the outer circumferential surface of the flange portion of the rotational impeller may include a structure formed to be curved with a predetermined curvature in a direction of the rotational central shaft.

In an embodiment of the present disclosure, the outer circumferential surface of the flange portion of the rotational impeller may include a structure formed to be linear in a direction of the rotational central shaft.

In an embodiment of the present disclosure, the flange portion of the rotating impeller may include a structure extending in a spiral screw shape in an outer circumferential direction from the rotational central shaft.

In an embodiment of the present disclosure, the lower end of the filter housing body may include a structure formed to be sloped downward with a predetermined inclination so that the washing water is easily discharged therefrom.

In an embodiment of the present disclosure, the rotational impeller may be formed to be rotatable by physical contact with the washing water.

In an embodiment of the present disclosure, the filter part may be formed of a sheet material of fabric, plastic, SUS or metal, and may include a mesh structure.

In an embodiment of the present disclosure, the filter part may be formed in a structure capable of filtering out fine particles having a fine dimension less than 5 mm.

In an embodiment of the present disclosure, the flange portion of the rotational impeller may include a structure extending a predetermined length in a longitudinal direction ('L' direction) of the filter housing body.

In an embodiment of the present disclosure, a bypass pipe for guiding the washing water may be formed on one side of the filter part.

In an embodiment of the present disclosure, the rotational filtering assembly may further include a motor for delivering rotational force to the rotational impeller unit, and a collecting mesh for collecting scale discharged by the rotational impeller unit.

Meanwhile, as the present disclosure provides a home appliance for washing clothes including the rotational filler assembly, for example, it can be preferably applied to, for example, a washing machine.

### [Advantageous Effects of Invention]

The rotational filtering assembly according to the present disclosure, and a washing machine including the same provide a following advantageous effect: it is possible to use the filtering device more effectively for a long time by providing a structure that can easily remove residues such as fine fiber plastics which may be accumulated in the filtering device mounted on the drainage region of a home appliances for clothes.

### [Brief Description of Drawings]

FIG. 1 shows a transparent perspective view of a washing machine to which a rotational filtering assembly according to an embodiment of the present disclosure is applied,
FIG. 2 shows an exploded perspective view of a rotational filtering assembly according to an embodiment of the present disclosure,
FIGS. 3 to 5 show views representing parts of a rotational impeller unit of a rotational filtering assembly according to various embodiments of the present disclosure,
FIG. 6 shows views representing how washing water is introduced into the rotational filtering assembly according to an embodiment of the present disclosure, and
FIG. 7 shows a cross-sectional view of a rotational filtering assembly according to an embodiment of the present disclosure.

### [Description of Embodiments]

Hereinafter, an embodiment of the present disclosure will be described in detail with reference to the accompanying drawings.

In adding reference numerals to components of each drawing, it should be noted that the same components have the same reference numerals as much as possible even if they are shown on different drawings. In addition, in describing an embodiment of the present disclosure, if it is determined that a detailed description of a related known configuration or function may prevent the understanding of the present disclosure, the detailed description thereof will be omitted.

In describing the components of an embodiment of the present disclosure, terms such as first, second, A, B, (a), (b), and the like may be used. These terms are only used to distinguish the component from other components, and the nature, sequence, or order of the corresponding component is not limited by the term. Further, unless otherwise defined, all terms used herein, including technical or scientific terms, have the same meaning as commonly understood by a person of ordinary skill in the art to which the present disclosure pertains. Terms as defined in a commonly used dictionary should be interpreted as having a meaning consistent with the meaning in the context of the related technology, and are not to be interpreted as an ideal or excessively formal meaning unless explicitly defined in this application.

An inlet and an outlet described below may mean regions, that is, holes, where fluid flowing in the rotational filtering assembly is first introduced and finally discharged, respectively.

As described above, in the case of a clothes washing machine, when used for a long time, most of the fine plastics discharged from textile clothes may be laminated onto a filter mounted on the discharge region. Accordingly, the present disclosure is characterized in that a rotational filtering structure for easily removing foreign substances such as fine plastics and the like is provided in the vicinity of the filter, thereby improving the lifespan of the filter and enabling more effective filtration.

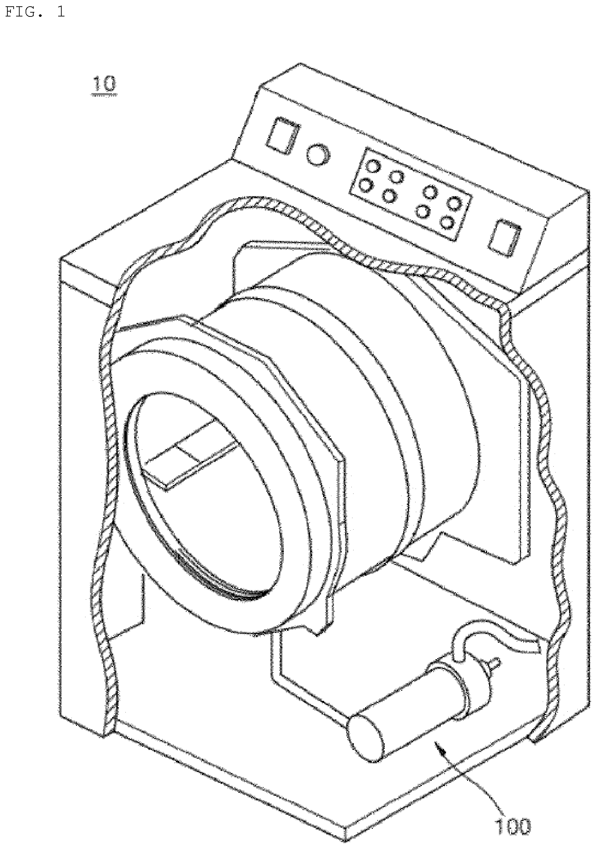

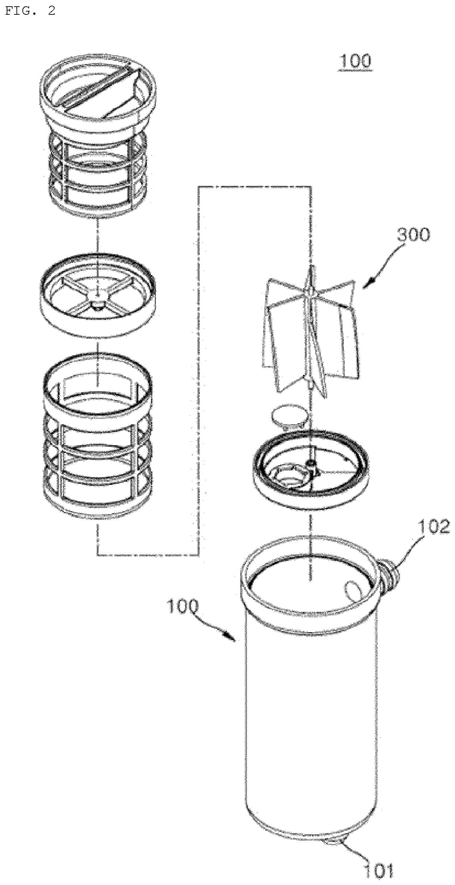

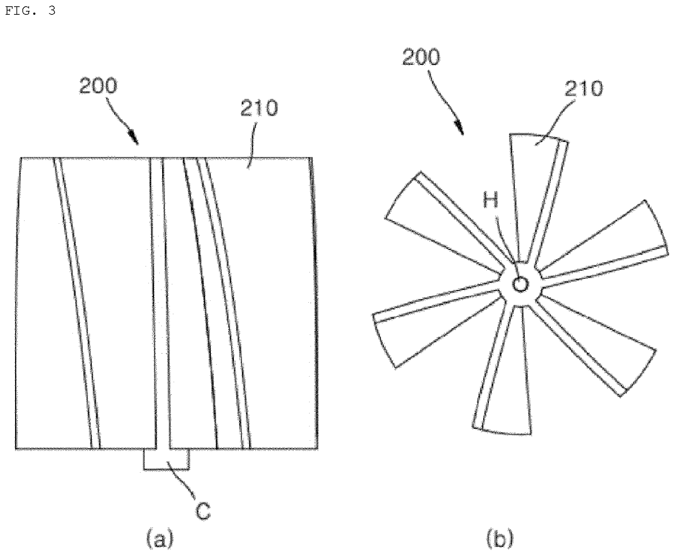

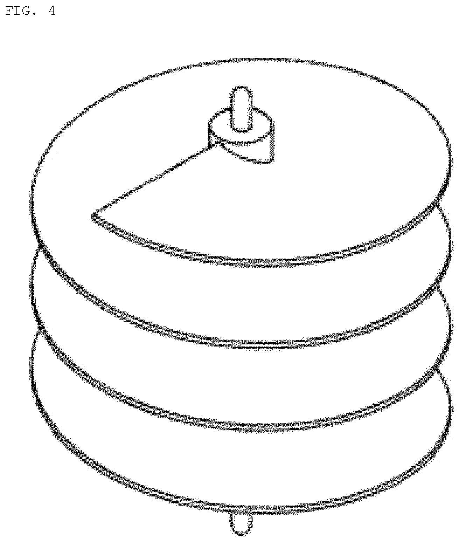

FIG. 1 shows a transparent perspective view of a washing machine to which a rotational filtering assembly according to an embodiment of the present disclosure is applied, FIG. 2 shows an exploded perspective view of a rotational filtering assembly according to an embodiment of the present disclosure, and FIGS. 3 to 5 show views representing parts of a rotational impeller unit of a rotational filtering assembly according to various embodiments of the present disclosure.

Referring to these drawings, the rotational filtering assembly 100 according to the present disclosure may be selectively disposed inside or outside of the washing machine 10 as well as on the front surface, lateral surface, or rear surface upper or lower region of the washing machine 10 without any restrictions, and includes a filter housing body 110 in which an inlet 101 and an outlet 102 are formed so that washing water is introduced thereinto from the outside, and then filtered and discharged therefrom, a filter part F disposed inside the filter housing body 110, and a rotational impeller unit 200 or 300 rotatably coupled to the central shaft of the filter housing body 110 and having a plurality of flange portions 210 or 310 formed thereon.

The rotational filtering assembly 100 may be formed on a path for flow of the washing water discharged from the washing tub (not shown) of the washing machine 10 after the washing is completed, that is, a drain hose path. The hose may extend from the washing tub, and pass through the rotational filtering assembly 100 according to the present disclosure, and protrude to the outside through a discharge hole (not shown) formed on one side surface of the washing machine 10.

The rotational filtering assembly 100 includes the filter housing body 110 forming an external appearance, and the filter housing body 110 is formed in a cylindrical shape with an inner space formed therein so that the washing water is introduced thereinto and filtered. The inlet 101 is formed at the center of or eccentrically on the upper side of the filter housing body 110 to allow the washing water to flow in. The inlet 101 is formed in the shape of a hole so that the washing water can be easily introduced thereinto. In some cases, the additional inlet 101 and outlet 102 may be formed on the upper and lower side regions of the filter housing body 110, respectively. Of course, there is no particular restriction on the formation location and number of the inlet 101 and the outlet 102.

Also, in some cases, the inlet 101 of the filter housing body 110 may be separately and independently detachable. Similarly, the outlet 102, which is formed in a hole shape on the lower side of the filter housing body 110 so that the washing water is easily discharged, may be separately and independently detachable.

The filter part F of the rotational filtering assembly 100 may be inserted into the inside of the filter housing body 110 forming the external appearance of the rotational filtering assembly 100. That is, the filter part F may be disposed along the inner surface of the filter housing body 110 except for the inlet 101 and the outlet 102. Therefore, after the washing water flows into the inside of the filter housing body 110 of the rotational filtering assembly 100, it can be easily discharged after being filtered through the inside and outside of the filter part F. For example, the filter part F may be formed by bonding opposite ends of the sheet by hot melt bonding, thermal bonding or the like in order to realize the sheet shape into a cylindrical shape. Alternatively, of course, it may also be formed by an insert injection molding scheme. The filter part F may be deformable according to the shape of the filter housing body 110, and may have, for example, a triangular, quadrangular, or polygonal cross section besides a cylindrical shape.

According to the present disclosure, the filter part F can filter out foreign substances contained in the washing water, for example, fine plastics or the like discharged in large quantities from fibers. The filter part F may be provided as an independent structure that is detachable from the washing machine 10. Therefore, when replacement of the filter part F is required depending on the period of use, the user can easily perform the replacement thereof to continue to use.

Preferably, the filter part F may be formed in a structure capable of filtering out even fine particles having a fine size less than 5 mm. In some cases, the filter part may have the fine size which enables the filtering out of ultra-fine plastic particles, and may be configured to filter out particles of 0.1 um or less. In an example, the filter part F may be provided as a non-woven fabric formed to have a mesh net shape or a tubular or cylindrical shape in the form of one or two or more stacked layers of sheet material such as fabric, plastic, SUS, metal or the like. Of course, there is no particular restriction on the shape or material of this filter part F as long as the filter part can collect the fine fiber particles filtered out from the washing water.

In an example, the filter part F may be formed with a carbon block filter, a nano electrostatic sheet and a UF sheet which are disposed in the form of surrounding the outer circumferential surface of the carbon block filter. The carbon block filter may include active carbon, a binder, and an additive. The nano electrostatic sheet may include glass fiber, cellulose, alumina fiber, polypropylene (PP), and polyethylene (PE), and the UF sheet may include polysulfone (PSF), polyethersulfone (PES) and polyvinylidene fluoride (PVDF), polypropylene (PP) and polyethylene (PE).

If necessary, a bypass pipe (not shown) may be formed in the filter part F. Therefore, when the filter is clogged due to the accumulation of foreign substances or the like in the filter part F, the discharge can be made through the bypass pipe without passing through the filter part F.

Meanwhile, the rotational impeller unit 200 or 300 according to the present disclosure is rotatably disposed on the rotational central shaft C of the filter housing body 110. The rotational central shaft C is disposed in a vertical direction passing through the center of the filter housing body 110.

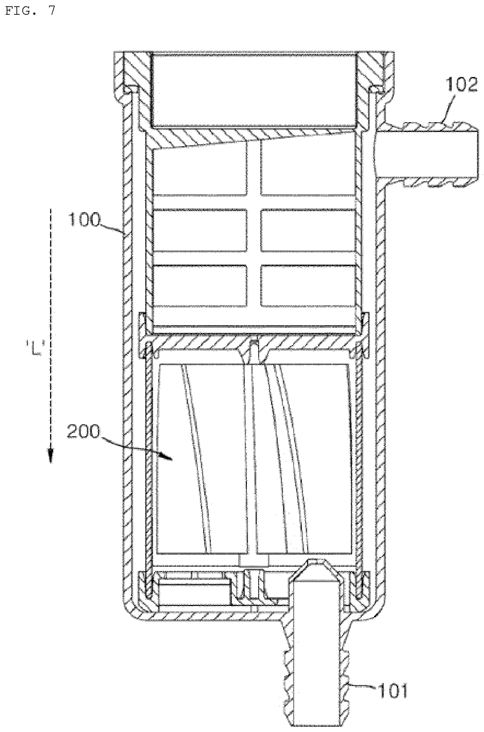

The rotational impeller unit 200 or 300 has a rotational shaft insertion hole H formed in the hollow central shaft so that the rotational central shaft C of the filter housing body 110 is inserted and operatively connected thereto to be rotatable. Here, on the central shaft, a plurality of flange portions 210 or 310 are formed extending a predetermined length toward the outer circumference. That is, as shown in FIG. 7, the plurality of flange portions 210 or 310 may be formed in a shape extending in the longitudinal axis direction ('L' direction) of the filter housing body 110.

Here, one ends of the plurality of flange portions 210 or 310 may be disposed to be spaced apart a predetermined distance from the outer circumferential surface of the filter part F. This can minimize damage such as wear or the like due to contact with the filter part F during the rotation of the plurality of flange portions 210 or 310. In some cases, one end of the impeller unit 200 300 may be disposed in a shape in which it is partially or entirely in contact with the inner circumferential surface of the filter housing body 110.

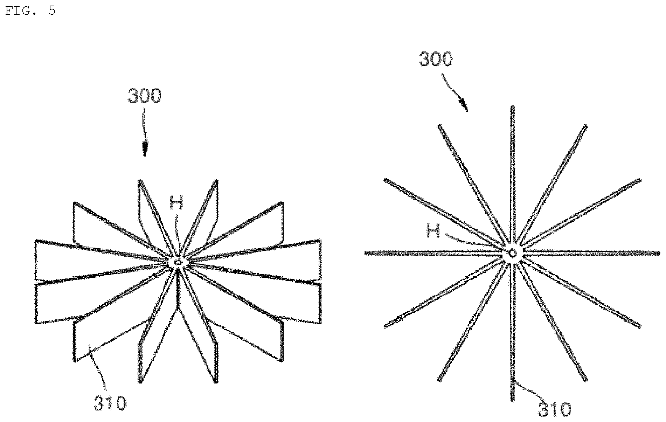

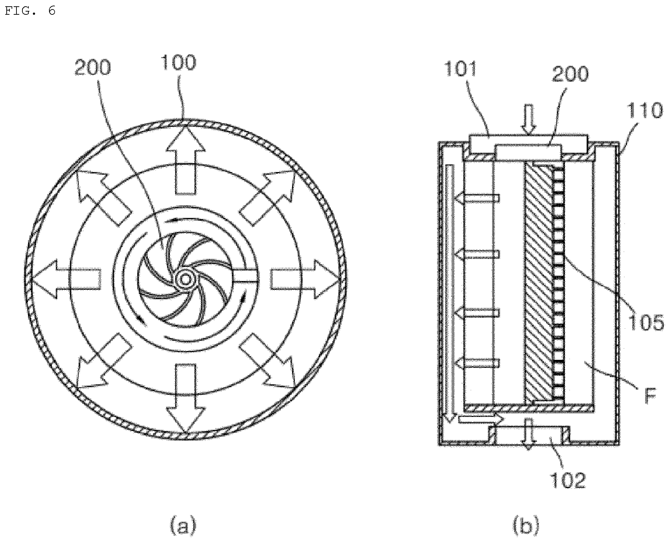

Specifically, the flange portions 210 or 310 of the rotational impeller unit 200 or 300 may be radially arranged at predetermined intervals with respect to the central shaft. In some cases, a plurality of brushes (see FIG. 6B, 105) may be formed at the ends of the flange portions 210 or 310 of the rotational impeller unit 200 or 300. There is no particular restriction on the material of the brush (see FIG. 5, 105) as long as it is capable of recovering its shape by a predetermined elastic force after shape deformation.

As shown in FIGS. 3 and 5, the flange portions 210 and 310 of the rotational impeller units 200 and 300 may be formed in a linear shape or in a curved shape with a predetermined curvature in one direction from the central shaft.

First, the flange portions 210 of the rotational impeller unit 200 are formed in the longitudinal direction along the central shaft, as shown in FIG. 3. Six flange portions 210 are formed to extend radially at predetermined intervals based on the central shaft. In this case, the flange portion 210 is formed in a shape curved with a predetermined curvature on the side and plane. The plurality of brushes (see FIG. 5, 105) may be formed at an end of the flange portion 210.

Additionally, as shown in FIG. 5, the flange portions 310 of the rotational impeller unit 300 are formed on the upper region of the rotational central shaft C of the filter housing body 110. Twelve flange portions 310 are formed to extend radially at predetermined intervals based on the central shaft. In this case, the flange portions 310 may be formed to linearly extend a predetermined length on a plane. Similarly, the plurality of brushes (see FIG. 5, 105) may be formed at an end of the flange portion 310.

In some cases, the plurality of flange portions 310 of the rotational impeller unit 300 may be formed at predetermined intervals in a direction from the upper side to the lower side with respect to the rotational central shaft C of the filter housing body 110. In a specific example, when a plurality of flange portions 310 of the rotational impeller unit 300 are provided, they may also be configured to be alternately formed only on the right or left region with respect to the rotational central shaft C. That is, one rotational impeller unit 300 disposed at the uppermost region inside the filter housing body 110 may be formed in a structure in which only six flange portions 310 are formed only on the right side with respect to the central shaft, and another rotational impeller unit 300 disposed adjacent to the lower region thereof may be formed in a structure in which only six flange portions 310 are formed only on the left side with respect to the central shaft. Therefore, the filtering effect can be maintained without disturbing the flow of the washing water introduced into the filter housing body 110. Of course, the shape, number, formation location, or the like of the flange portions 310 of the rotational impeller unit 300 can be appropriately modified or changed depending on the use environment.

In some cases, in the rotational filtering assembly 100 according to the present disclosure, a motor part (not shown) which delivers rotational force to the rotational impeller unit 200 or 300, and a collecting mesh in which scale discharged by the rotating impeller unit 200 or 300 is stored may be additionally formed. In this case, the rotational operation of the rotational impeller unit 200 or 300 may be controlled by a separate detection sensor (not shown) so that the motor part operates only while the washing water is introduced.

Hereinafter, the filtering process by the rotational filtering assembly 100 according to the present disclosure described above will be described with accompanying drawings in which FIG. 6 shows views representing how washing water is introduced into the rotational filtering assembly according to an embodiment of the present disclosure, and FIG. 7 shows cross-sectional views of a rotational filtering assembly according to an embodiment of the present disclosure.

Referring to these drawings together with FIGS. 1 to 4, first, the washing water is supplied to the washing tub of the washing machine 10. The supplied washing water is discharged to the outside of the washing machine 10 through a pipe or a hose after washing of clothes and the like is completed. The washing water discharged from the washing tub is introduced into the rotational filtering assembly 100 according to the present disclosure formed at the inner lower part of the washing machine 10 and is filtered before being discharged to the outside. At this time, since the rotational impeller unit 200 or 300 described above is disposed in the rotational filtering assembly 100, the washing water introduced after being discharged from the washing tub passes through the filter part F, and fine fiber plastics can be filtered out.

That is, after the washing water is discharged from the washing tub, it is introduced through the inlet 101 formed on the upper side of the filter housing body 110 of the rotational filtering assembly 100. The introduced washing water passes through the filter part F formed inside the filter housing body 110 and capable of filtration of fine plastics, and after being filtered, it is discharged to the outside through the outlet 102 formed on the lower side of the filter housing body 110.

In this case, scale may be formed on the inner and outer surfaces of the filter part F as fine fiber plastic eluted from the washing water is accumulated. At this time, as shown in FIG. 5, the rotational impeller unit 200 or 300 of the rotational filtering assembly 100 is automatically or passively rotated, while foreign substances such as scale or the like accumulated in the filter part F can be easily removed by the flange portions 210 or 310 of the rotational impeller unit 200 or 300. The plurality of brushes 105 formed on the flange portion 210 or 310 of the rotational impeller unit 200 or 300 as described above enable the removal of scale or the like with ease while minimizing damage to the filter part F.

With such configuration, the washing machine to which the rotational filtering assembly 100 according to the present disclosure is applied can allow the rotational impeller units 200 and 300 to be rotated by collision of the fluid of the washing water discharged from the washing tub. In other words, by allowing the flange portions 210 or 310 of the rotational impeller unit 200 or 300 disposed at the region below and adjacent to the inlet 101 to be rotated by the flow rate of the washing water when the washing water is introduced into the inlet 101 formed in the upper central region of the filter housing body 110 of the rotational filtering assembly 100, the rotation is controlled according to the flow rate of the washing water, and so scale and the like can be effectively removed.

In the above, an embodiment of the present disclosure has been described in detail with reference to the accompanying drawings. However, it should be taken for granted that the embodiments of the present disclosure are not necessarily limited to the above-described embodiment, and various modifications and implementation within the equivalent scope are possible by those skilled in the art to which the present disclosure pertains. Therefore, it should be understood that the true scope of the right of the present disclosure is determined by the claims described later.

### [List of reference signs]

100: Rotational filtering assembly 101: Inlet
102: Outlet 105: Brush
110: Filter housing body 200, 300: Rotational impeller unit
C: Rotational central shaft H: Rotational shaft insertion hole
F: Filter part

## Claims

1. A rotational filtering assembly comprising:
a filter housing body having an inlet and an outlet formed therein such that washing water is introduced thereinto from the outside, and then filtered and discharged therefrom;
a filter part disposed inside the filter housing body; and
at least one rotational impeller unit rotatably coupled to a central shaft of the filter housing body and having at least one flange portion formed therein.

2. The rotational filtering assembly of claim 1, wherein the filter housing body is formed in a hollow cylindrical shape or polygonal shape, and the rotational impeller unit is formed at a region adjacent to at least one of the inlet and outlet of the filter housing.

3. The rotational filtering assembly of claim 1, wherein the flange portion of the rotational impeller is formed in a shape extending radially outward with respect to the rotational central shaft.

4. The rotational filtering assembly of claim 1, wherein at an end of the flange portion, at least one brush capable of shape deformation with a predetermined elastic force is formed.

5. The rotational filtering assembly of claim 4, wherein a gap is formed between one side end of the flange portion of the rotational impeller and the outer surface of the filter part, so that they are spaced apart from each other by a predetermined distance, and they include a structure in which the brush removes foreign substances stacked on the outer portion of the filter part when the rotational impeller is rotated.

6. The rotational filtering assembly of claim 1, wherein the outer circumferential surface of the flange portion of the rotational impeller includes a structure formed to be curved with a predetermined curvature in a direction of the rotational central shaft.

7. The rotational filtering assembly of claim 1, wherein the flange portion of the rotating impeller includes a structure extending in a screw shape in an outer circumferential direction from the rotational central shaft.

8. The rotational filtering assembly of claim 1, wherein the outer circumferential surface of the flange portion of the rotational impeller includes a structure formed to be linear in a direction of the rotational central shaft.

9. The rotational filtering assembly of claim 1, wherein the lower end of the filter housing body includes a structure formed to be sloped downward with a predetermined inclination so that the washing water is easily discharged therefrom.

10. The rotational filtering assembly of claim 1, wherein the rotational impeller is formed to be rotatable by physical contact with the washing water.

11. The rotational filtering assembly of claim 1, wherein the filter part is formed of a sheet material of fabric, plastic, SUS or metal, and includes a mesh structure.

12. The rotational filtering assembly of claim 1, wherein the filter part is formed in a structure capable of filtering out fine particles having a fine dimension less than 5 mm.

13. The rotational filtering assembly of claim 1, wherein the flange portion of the rotational impeller includes a structure extending a predetermined length in a longitudinal direction ('L' direction) of the filter housing body.

14. The rotational filtering assembly of claim 1, wherein a bypass pipe for guiding the washing water is formed on one side of the filter part.

15. The rotational filtering assembly of claim 1, further comprising:
a motor for delivering rotational force to the rotational impeller unit; and
a collecting mesh for collecting scale discharged by the rotational impeller unit.

16. A washing machine comprising a rotational filtering assembly according to any one of claims 1 to 15.
